# EUROPÄISCHE PATENTANMELDUNG

(11) **EP 1 002 641 A1**
(43) Veröffentlichungstag der Anmeldung: **24.05.2000**
(21) Anmeldenummer: 98811148.0
(22) Anmeldetag: 19.11.1998
(51) Int. Cl.: B32B 17/10, C03C 27/12

(54) **Fahrzeugfenster**

(71) Anmelder: Glas Trösch Holding AG, 3011 Bern (CH)
(72) Erfinder: Walther, Ulrich, 4950 Huttwil (CH); Meyer, Werner, 4917 Melchnau (CH)
(74) Vertreter: Roshardt, Werner Alfred, Dipl.-Phys.

(57) **Zusammenfassung**

Ein Fahrzeugfenster weist ein Verbundsicherheitsglas aus zwei durch eine Zwischenschicht (30) verbundenen Einscheibensicherheitsgläsern (10, 20) auf. In der Zwischenschicht (30) sind durch Diskontinuitäten (40) in der Zwischenschicht (30) Sollbruchlinien zur Schaffung eines Notausstiegs vorhanden. Die Zwischenschicht (30) ist in einem mit dem Fahrzeug verbundenen Randbereich des Verbundsicherheitsglases derart undurchtrennbar und flexibel ausgebildet, dass beim Durchtrennen der Sollbruchlinien ein reissfest und nach Art eines Scharniergelenks schwenkbar mit dem Fahrzeug verbundener Notausstiegsflügel gebildet wird. Das Fahrzeugfenster bietet einerseits im Falle eines Unfalls oder eines Brandes eine einfache Notausstiegsmöglichkeit und vermindert andrerseits im Falle eines unbeabsichtigten Berstens des Fensters die Gefährdung von Personen innerhalb und ausserhalb des Fahrzeuges durch aus dem Fenster fallende Glassplitter.

## Beschreibung

### Stand der Technik

Für Anwendungen insbesondere in Strassen- und Schienenfahrzeugen wie Personenkraftwagen, Omnibussen und Eisenbahnwagen, die der Personenbeförderung mit grosser Geschwindigkeit dienen, ist die Verwendung von Fahrzeugfenstern des Typs bekannt, die zwei über eine Zwischenschicht zu einem Verbundsicherheitsglas zusammengeklebte Einscheibensicherheitsgläser umfassen. Ein Verbundsicherheitsglas dieser Art wird beispielsweise in der internationalen Patentanmeldung WO-A-92/11137 beschrieben.

Im Falle eines Bruchs des Verbundsicherheitsglases zerbersten die beiden Einscheibensicherheitsgläser in eine Vielzahl von kleinen Fragmenten. Diese werden durch die Zwischenschicht, die üblicherweise eine Kunststoff-Klebefolie umfasst, zusammengehalten, so dass die zerborstene Scheibe in der Halterung verbleibt. Dadurch wird bei einem unfallbedingten Bersten des Verbundsicherheitsglases vermieden, dass die Insassen eines Fahrzeuges durch herumfliegende Glassplitter verletzt werden können.

Um bei einem Unfall oder einem Brand eine Fluchtmöglichkeit für die Fahrzeuginsassen zu schaffen, ist es bei der Verwendung von Verbundsicherheitsgläsern für Fahrzeugfenster notwendig, spezielle Notausstiegsvorrichtungen zu schaffen. Zu diesem Zweck sind eine Vielzahl von Notausstiegsvorrichtungen bekannt, bei denen ein Verbundsicherheitsglas mit im Notfall lösbaren Befestigungsmitteln in einem Fensterrahmen festgehalten werden. Die Befestigungsmittel können z.B. Federn, Klammern, elastische O-Ring-Dichtungen u.ä. im Notfall lösbare Befestigungsmittel umfassen. Als Nachteil dieser Notausstiegsvorrichtungen erweist sich ihre oftmals komplizierte Bedienung. Im Falle eines Brandes oder eines Unfalls, insbesondere wenn Panik unter den Fahrzeuginsassen ausbricht, können sie von ungeübten Fahrzeuginsassen nicht innert nützlicher Frist geöffnet werden. Zudem bedürfen die meisten dieser Notausstiegsvorrichtungen einer regelmässigen Wartung, was die Unterhaltskosten für das entsprechende Fahrzeug verteuert.

In der amerikanischen Patentschrift US 5 350 613 wird ein ein Verbundsicherheitsglas aufweisendes Fahrzeugfenster mit einem Notausstieg beschrieben, bei welchem in der Fensterfläche eine den Umriss einer Ausstiegsöffnung definierende Sollbruchlinie ausgebildet ist. Im Notfall kann mit einem Spitzhammer das Verbundsicherheitsglas entlang der Sollbruchlinie zertrümmert werden, worauf der innerhalb des durch die Sollbruchlinie definierten Umrisses liegende Teil des Fensters aus der restlichen Fensterfläche herausfällt. Für Anwendungen insbesondere in Hochgeschwindigkeitszügen weist jedoch ein Fahrzeugfenster gemäss US 5 350 613 den Nachteil auf, dass bei einem Bersten des Fensters der innerhalb des durch die Sollbruchlinie definierten Umrisses liegende Teil des Fensters als Ganzes herausfällt. Dies kann z.B. katastrophale Folgen haben, wenn ein Fenster bei der Durchfahrt des Zuges durch einen Bahnhof hindurch zerbricht und mit grosser Geschwindigkeit auf die am Bahnhof wartenden Personen fällt.

### Darstellung der Erfindung

Aufgabe der vorliegenden Erfindung ist die Bereitstellung eines Fahrzeugfensters, das im Falle eines Unfalls oder eines Brandes eine einfache Notausstiegsmöglichkeit bietet und im Falle eines unbeabsichtigten Berstens des Fensters die Gefahren für Personen innerhalb und ausserhalb des Fahrzeuges vermindert.

Die Lösung der Aufgabe ist Gegenstand des unabhängigen Patentanspruchs.

Gemäss der Erfindung weist ein Fahrzeugfenster ein Verbundsicherheitsglas aus zwei durch eine Zwischenschicht verbundenen Einscheibensicherheitsgläsern auf, wobei durch Diskontinuitäten in der Zwischenschicht Sollbruchlinien zur Schaffung eines Notausstiegs vorhanden sind. Das erfindungsgemässe Fenster zeichnet sich dadurch aus, dass die Zwischenschicht in einem mit dem Fahrzeug verbundenen Randbereich des Verbundsicherheitsglases derart undurchtrennbar und flexibel ausgebildet ist, dass beim Durchtrennen der Sollbruchlinien ein reissfest und nach Art eines Scharniergelenks schwenkbar mit dem Fahrzeug verbundener Notausstiegsflügel gebildet wird.

In einem Randbereich des Verbundsicherheitsglases ist einerseits das Verbundsicherheitsglas fest mit dem Fahrzeug verbunden, wobei das Verbundsicherheitsglas entweder an einem in einer Fahrzeugwand ausgebildeten Fensterrahmen oder direkt an einer Fahrzeugwand befestigt ist.. Andrerseits ist die Zwischenschicht in diesem Randbereich derart undurchtrennbar ausgebildet, dass sie eine reissfeste Verbindung zwischen den beiden Einscheibensicherheitsgläsern schafft. In diesem Randbereich ist über das Verbundsicherheitsglas auch die Zwischenschicht, welche die beiden Einscheibensicherheitsgläser miteinander verbindet, fest mit dem Fahrzeug verbunden. Somit sind über die Zwischenschicht im Randbereich auch die nicht durch Diskontinuitäten von dieser abgetrennten Flächenbereiche der Zwischenschicht und die in diesen Flächenbereichen mit der Zwischenschicht verbundenen Glasflächen mit dem Fahrzeug verbunden.

Unter einer Diskontinuität in der Zwischenschicht eines Verbundsicherheitsglases wird im vorliegenden Zusammenhang stets eine Unterbrechung der durch die Zwischenschicht vermittelten Verbindung zwischen den beiden Einscheibensicherheitsgläser verstanden. Aufgrund der fehlenden Verbindung stellt eine Diskontinuität eine Schwächungslinie oder Sollbruchlinie des Verbundsicherheitsglases dar. Diskontinuitäten können in Form von zusammenhängenden oder unterbrochenen Linien, Streifen oder länglichen Flächenbereichen in der Zwischenschicht ausgebildet sein. Nach einem Bersten der beiden Einscheibensicherheitsgläser des Verbundsicherheitsglases wird der innere Zusammenhalt des Verbundsicherheitsglases entlang der Sollbruchlinien aufgehoben, weil entlang dieser Sollbruchlinien die verbindende Zwischenschicht unterbrochen ist. Entlang der Sollbruchlinien ist dann der mit dem am Fahrzeug befestigten Randbereich zusammenhängende Flächenbereich des Verbundsicherheitsglases vom Rest des Fensters getrennt. Die Sollbruchlinien definieren somit einen frei beweglichen Rand der reissfest mit dem Fahrzeug verbundenen Fensterfläche. Aufgrund der Flexibilität der Zwischenschicht im die reissfeste Verbindung zum Fahrzeug schaffenden Randbereich wird eine nach Art eines Scharniergelenks schwenkbare Verbindung zwischen dem Verbundsicherheitsglas und dem Fahrzeug gebildet. Die reissfest mit dem Fahrzeug verbundene Fensterfläche stellt somit einen Notausstiegsfensterflügel dar, welcher nach Art eines Scharniergelenks bezüglich des Fahrzeuges schwenkbar ist.

Im Bedarfsfall kann einerseits nach einem Zertrümmern des Verbundsicherheitsglases der Notausstiegsfensterflügel aufgestossen werden, um eine Notausstiegsöffnung durch das Fenster hindurch zu schaffen. Es versteht sich von selbst, dass eine Notöffnung durch das Fenster hindurch sowohl vom Fahrzeuginnern her als auch von der Fahrzeugaussenseite her geschaffen werden kann. Das Verbundsicherheitsglas kann von innen oder von aussen her mit einem geeigneten Werkzeug (z.B. einem Spitzhammer) zertrümmert werden. Anschliessend kann der Notausstiegsfensterflügel nach aussen oder nach innen geschwenkt werden, um die Notöffnung im Fensterrahmen freizugeben.

Andrerseits wird im Falle eines unbeabsichtigten Berstens des Verbundsicherheitsglases (z.B. durch einen Steinschlag) der Notausstiegsfensterflügel über die Zwischenschicht in dem am Fahrzeug befestigten Randbereich reissfest am Fahrzeug festgehalten. Dadurch wird selbst bei einem mit grosser Geschwindigkeit fahrenden Fahrzeug ein unerwünschtes und u.U. äusserst gefährliches Herausfallen des Notausstiegsfensterflügels wirksam verhindert.

Im Unterschied zu den bekannten Notausstiegsvorrichtungen für Verbundsicherheitsgläser mit lösbaren Befestigungsmitteln in Form von Federn, Klammern, elastischen O-Ring-Dichtungen u.ä. ist der Notausstieg beim Fahrzeugfenster gemäss der Erfindung äusserst einfach zu bedienen. Erfahrungsgemäss stellt das Zertrümmern einer Scheibe für eine in Panik geratene Person die naheliegendste Reaktion zur Schaffung eines Fluchtweges dar. Das erfindungsgemässe Fenster mit Notausstieg unterscheidet sich weiterhin in vorteilhafter Weise von den erwähnten bekannten Notausstiegsvorrichtungen, indem es im wesentlichen wartungsfrei ist, da es keine beweglichen und/oder elastischen Teile umfasst, die regelmässig geschmiert oder anderweitig gewartet werden müssen.

Als weiterer Vorteil des erfindungsgemässen Fensters mit Notausstieg erweist sich das Fehlen von Sichtbehinderungen im mittleren Bereich der Fensterfläche, dies im Unterschied zu Fenstern gemäss Patentschrift US 5 350 613.

Gemäss einer bevorzugten Ausführungsform der Erfindung umfasst die Zwischenschicht ein reissfestes, zusammenhängendes Schichtmaterial, das entlang eines ersten Randabschnittes des Verbundsicherheitsglases mit einem Einstand bezüglich des Randes derart angeordnet ist, dass durch den Einstand entlang des ersten Randabschnittes eine Diskontinuität in der Zwischenschicht in Form eines Hohlraumes zwischen den beiden Einscheibensicherheitsgläsern gebildet wird. Entlang eines zweiten, den mit dem Fahrzeug verbundenen Randbereich umfassenden Randabschnittes ist das Schichtmaterial ohne Einstand bezüglich des Randes angeordnet ist, um entlang des zweiten Randabschnittes eine reissfeste Verbindung zum Fahrzeug zu bilden. Die Anordnung eines zusammenhängenden, einstückigen Schichtmaterials mit einem Einstand oder Abstand bezüglich des Randes stellt eine äusserst einfach und deshalb kostengünsitg zu fertigende Diskontinuität in der Zwischenschicht dar.

Bei der Ausführungsart der Erfindung mit einer Zwischenschicht-Diskontinuität in Form eines Hohlraumes zwischen den beiden Einscheibensicherheitsgläsern kann weiter entlang des ersten Randabschnittes die Fensterfläche mindestens eines der beiden Einscheibensicherheitsgläser vom Rand bis über den Einstand des Schichtmaterials hinaus mit einer Sichtabdeckung überdeckt sein, um die Diskontinuität optisch zu kaschieren. Dadurch wird jegliche Sichtbehinderung im Sichtbereich des Fahrzeugsfensters vermieden. Vorzugsweise ist zu diesem Zweck ein Randbereich der Fensterfläche des an der Fahrzeugaussenseite angeordneten Einscheibensicherheitsglases mit einer für UV-Strahlung undurchlässigen Farbe bedeckt. Die Farbe kann beispielsweise mittels eines Siebdruckverfahrens auf die Fensterscheibe aufgedruckt werden. Die Sichtblende bietet dann gleichzeitig einen UV-Schutz für allfällige auf UV-Strahlung empfindliche Materialien des Fensters, so beispielsweise im Falle eines Verbundsicherheitsglases mit einem randseitigen Dichtungsrahmen aus Polyurethan.

Das Fahrzeugfenster kann eine im wesentlichen rechteckige Form mit einem oberen Fensterrand, zwei seitlichen Fensterrändern und einem unteren Fensterrand aufweisen. Bei der Ausführungsart der Erfindung mit einem reissfesten Zwischenschichtmaterial, das entlang eines ersten Randabschnittes mit einem randseitigen Einstand und entlang eines zweiten Randabschnittes ohne randseitigen Einstand angeordnet ist, sind der erste Randabschnitt vorzugsweise entlang des oberen sowie der beiden seitlichen Fensterränder und der zweite Randabschnitt entlang des unteren Fensterrandes ausgebildet. Der Notausstiegsfensterflügel ist in diesem Fall nach Art eines Scharniergelenks, welches entlang des unteren, im wesentlichen horizontalen Fensterrandes ausgebildet ist, schwenkbar mit dem Fahrzeug bzw. dem Fensterrahmen verbunden. Dadurch wird das Öffnen des Notausstiegsfensterflügels im Notfall durch die auf den Notausstiegsfensterflügel wirkende Schwerkraft unterstützt.

Vorzugsweise umfasst die Zwischenschicht eine Kunststofffolie. Bei einer bevorzugten Ausführungsart der Erfindung besteht die Kunststofffolie aus PVB (Polyvinylbutyral). Bei einer anderen bevorzugten Ausführungsart der Erfindung besteht die Kunststofffolie aus EVA (Ethylen-Vinylacetat-Copolymer). Die Dicke der Folie ist derart bemessen, dass die Folie eine zum Zwecke der nachfolgend beschriebenen Befestigung des Notausstiegsfensterflügels am Fensterrahmen ausreichende Reissfestigkeit aufweist. Bei anderen bevorzugten Ausführungsarten der Erfindung kann die Zwischenschicht anstelle einer Kunststofffolie andere geeignete Schichtmaterialien umfassen.

Gemäss einer bevorzugten Ausführungsart der Erfindung ist das Verbundsicherheitsglas mittels eines randseitigen Dichtungsrahmens hermetisch versiegelt. Der randseitige Dichtungsrahmen des Verbundsicherheitsglases kann im wesentlichen aus Polyurethan gefertigt sein. Bei anderen Ausführungsarten der Erfindung kann der randseitige Dichtungsrahmen aus Polisulfit, Silikon oder anderen geeigneten Dichtungsmaterialien gefertigt sein.

Bei einer weiteren bevorzugten Ausführungsart der Erfindung weist das Fahrzeugfenster ein weiteres, zum ersten Verbundsicherheitsglas ähnliches mit Sollbruchlinien versehenes Verbundsicherheitsglas auf, dessen Zwischenschicht in einem mit dem Fahrzeug verbundenen Randbereich des Verbundsicherheitsglases derart undurchtrennbar und flexibel ausgebildet ist, dass beim Durchtrennen der Sollbruchlinien ein reissfest und nach Art eines Scharniergelenks schwenkbar mit dem Fahrzeug verbundener Notausstiegsflügel gebildet wird, wobei die beiden Verbundsicherheitsgläser im wesentlichen parallel zueinander in einer Fensteröffnung angeordnet sind, um eine Isolierverglasung zu bilden.

Die nachfolgende detaillierte Beschreibung der vorliegenden Erfindung dient in Verbindung mit den beiliegenden Zeichnungen nur als Beispiel für ein besseres Verständnis der Erfindung und ist nicht als Einschränkung des Schutzbereichs der Patentansprüche aufzufassen. Für den Fachmann sind aus der nachfolgenden Beschreibung in Verbindung mit den beiliegenden Zeichnungen und der Gesamtheit der Patentansprüche weitere vorteilhafte Ausführungsarten und Merkmalskombinationen ohne weiteres erkennbar, die jedoch immer noch innerhalb des Bereichs der vorliegenden Erfindung liegen.

### Kurze Beschreibung der Zeichnung

Die Zeichnungen stellen eine bevorzugte Ausführungsart der vorliegenden Erfindung dar. Es zeigen:
- Fig. 1: ein Fahrzeugfenster mit Notausstieg gemäss einer bevorzugten Ausführungsart der Erfindung in einer Seitenansicht von der Fahrzeugaussenseite her;
- Fig. 2: vergrösserte Teilansicht auf das Fahrzeugfenster aus Fig. 1 in einem Querschnitt entlang der Linie A-A.
Grundsätzlich sind in den Figuren gleiche Teile mit gleichen Bezugszeichen versehen.

### Wege zur Ausführung der Erfindung

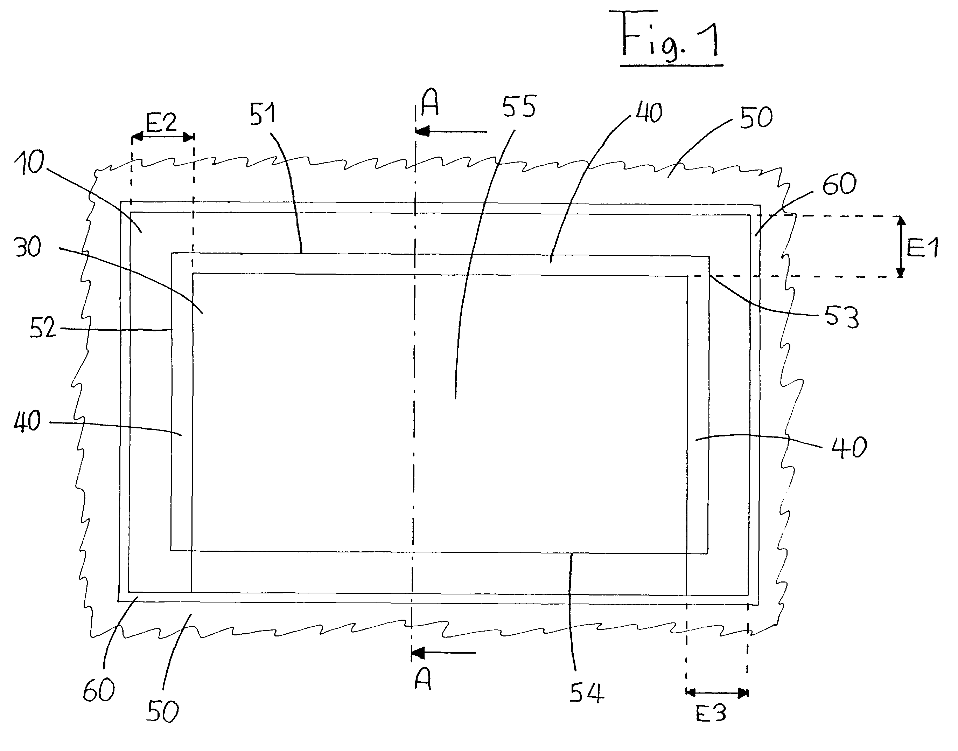

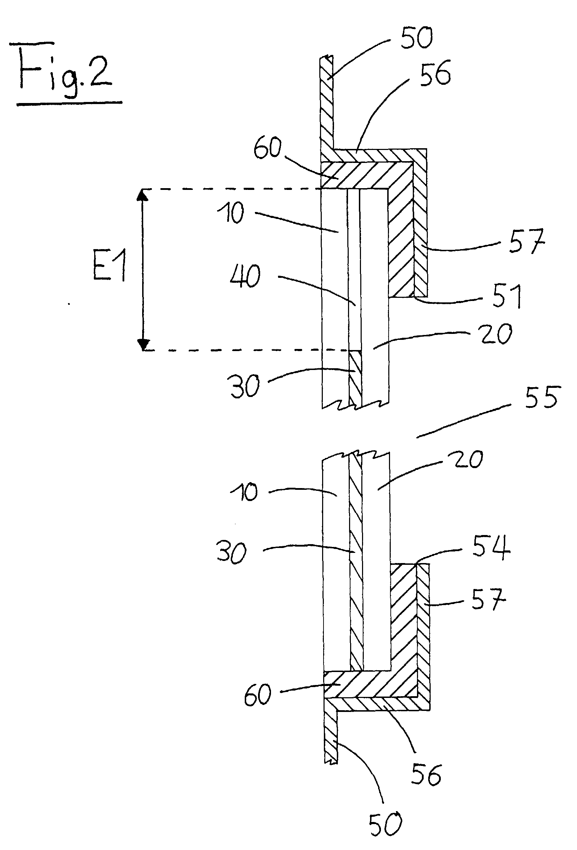

In der Figur 1 ist ein Fahrzeugfenster gemäss einer bevorzugten Ausführungsart der Erfindung in einer Seitenansicht von der Fahrzeugaussenseite her dargestellt und in der Figur 2 ist dieses Fahrzeugfenster in einer vergrösserten Querschnittansicht dargestellt, wobei in der Darstellung der Figur 2 ein für das Verständnis der Erfindung unwesentlicher mittlerer Bereich des Fensters weggelassen ist.

Bei der in den Figuren dargestellten Ausführungsart der Erfindung ist in einer Fahrzeugwand 50 ein die Ränder 51, 52, 53, 54 einer im wesentlichen rechteckigen Fensteröffnung 55 definierender Fensterrahmen ausgebildet. Der Fensterrahmen umfasst eine im wesentlichen unter einem rechten Winkel zur Fahrzeugaussenwand 50 von dieser nach innen verlaufende Verbindungswand 56, an deren inneren Ende eine parallel zur Fahrzeugaussenwand 50 angeordnete, die Sichtöffnung 55 des Fensters definierende Rahmeninnenwand 57 anschliesst. Der obere Rand 51, die beiden seitlichen Ränder 52, 53 und der untere Rand 54 der Sichtöffnung 55 bilden die Fensterränder 51, 52, 53, 54. Sowohl die Verbindungswand 56 als auch die Innenwand 57 des Fensterrahmens sind je vollständig um die rechteckige Fensteröffnung 55 herum verlaufend ausgebildet.

Das in den Figuren dargestellte Fahrzeugfenster weist zwei über eine Zwischenschicht zu einem Verbundsicherheitsglas zusammengeklebte rechteckige Einscheibensicherheitsgläser 10, 20 auf. Das nach der Montage des Verbundsicherheitsglases im Fensterrahmen auf der Fahrzeuginnenseite liegende Einscheibensicherheitsglas 20 wird nachfolgend als Innenglas 20 bezeichnet, während das andere, an der Fahrzeugaussenseite liegende Glas 10 als Aussenglas 10 bezeichnet wird. Das rechteckige Verbundsicherheitsglas ist dem Rand entlang durch einen fest am Verbundsicherheitsglas angebrachten randseitigen Dichtungsrahmen 60 versiegelt, wobei der Dichtungsrahmen 60 die unter einem rechten Winkel zur Fensterfläche stehenden Randseiten des Verbundsicherheitsglases vollständig bedeckt. Zusätzlich bedeckt der Dichtungsrahmen 60 einen Randbereich der zum Fahrzeuginnern gerichteten Seite des Innenglases 20.

Der Fensterrahmen, das Verbundsicherheitsglas und der randseitige Dichtungsrahmen 60 desselben sind derart bemessen, dass das Verbundsichheitsglas mitsamt dem randseitigen Dichtungsrahmen 60 in den Fensterrahmen einsetzbar ist, um mittels eines geeigneten Klebers an diesem festgeklebt zu werden. Dabei wird entlang des gesamten Fensterumfangs der den Randbereich des Innenglases 20 bedeckende Teil des Dichtungsrahmens 60 an die Innenwand 57 des Fensterrahmens und der die rechtwinklig zur Fensterfläche stehenden Randseiten des Verbundsicherheitsglases bedeckende Teil des Dichtungsrahmens 60 an die Verbindungswand 56 des Fensterrahmens geklebt.

Bei der in den Figuren dargestellten Ausführungsart der Erfindung besteht der randseitige Dichtungsrahmen 60 des Verbundsicherheitsglases aus Polyurethan und ist in den Fensterrahmen geklebt. Bei weiteren, nicht in den Figuren dargestellten Varianten der Erfindung wird das aus dem Verbundsicherheitsglas und dem randseitigen Dichtungsrahmen bestehende Verbundsicherheitsglaselement direkt (d.h. ohne Fensterrahmen) an eine die Fensteröffnung aufweisende Wand eines Wagenkastens geklebt oder über ein Profilgummielement in die Fahrzeugwand montiert.

Bei dem in den Figuren dargestellten Verbundsicherheitsglas sind das Innenglas 20 und das Aussenglas 10 mittels einer die beiden Einscheibensicherheitsgläser (10, 20) verbindenden Zwischenschicht zusammenlaminiert, die ein flexibles Schichtmaterial 30 umfasst. Das flexible Schichtmaterial 30 besteht bei dem in den Figuren dargestellten Ausführungsbeispiel aus einer Folie 30 aus PVB (Polyvinylbutyral), deren Dicke derart bemessen ist, dass sie im wesentlichen undurchtrennbar ist, wobei im Zuge der vorliegenden Beschreibung ein Schichtmaterial dann als undurchtrennbar bezeichnet wird, wenn es zum Zwecke der nachfolgend beschriebenen Befestigung des Notausstiegsfensterflügels am Fensterrahmen eine ausreichende Reissfestigkeit aufweist.

Das in den Figuren dargestellte rechteckige Verbundsicherheitsglas hat eine Höhe von ungefähr 800 mm und eine Breite von ungefähr 1200 mm. Die Dicke des Aussenglases misst ca. 6 mm und diejenige des Innenglases ca. 5 mm. Die Dicke der PVB-Folie misst in diesem Fall ca. 0.76 mm, wodurch für Anwendungen des Fensters in Hochgeschwindigkeits-Eisenbahnwagen eine ausreichende Reissfestigkeit der PVB-Folie gewährleistet wird.

Auf drei Seiten des rechteckigen Verbundsicherheitsglases ist das Schichtmaterial 30 in Form einer PVB-Folie 30 mit je einem Einstand E1, E2 E3 bezüglich des Randes des Verbundsicherheitsglases angeordnet, so dass auf diesen Seiten dem Rand entlang zwischen dem Aussenglas und dem Innenglas ein Hohlraum 40 mit der Dicke der PVB-Folie und der Breite der Einstandes E1, E2, E3 ausgebildet ist. Bei dem in den Figuren dargestellten Ausführungsbeispiel sind die randseitigen Einstände entlang des oberen und der beiden seitlichen Ränder des rechteckigen Fahrzeugfensters ausgebildet, wobei die Einstände E1, E2, E3 je ungefähr 40 mm vom Rand her messen. Der auf drei Seiten des rechteckigen Verbundsicherheitsglases ausgebildete randseitige Hohlraum 40 zwischen dem Innenglas 20 und dem Aussenglas 10 definiert eine zusammenhängende Sollbruchlinie für das Verbundsicherheitsglas. Insgesamt wird durch die Anordnung der PVB-Folie mit einem Einstand E1, E2, E3 auf einfachste Art eine randseitige Sollbruchlinie für das Verbundsicherheitsglas geschaffen.

Dem unteren Rand des Verbundsicherheitsglases entlang erstreckt sich die PVB-Folie 30 bis zum Rand des Verbundsicherheitsglases, so dass dem unteren Rand entlang keine Sollbruchlinie ausgebildet ist. Weil einerseits dem unteren Fensterrand 54 entlang die Randseite des Verbundsicherheitsglases und ein Randbereich der Innenseite des Innenglases 20 über den randseitigen Dichtungsrahmen 60 des Verbundsicherheitsglases am Fensterrahmen 56, 57 festgeklebt sind und andrerseits die PVB-Folie 30 bis zum Rand des Verbundsicherheitsglases mit dem Innenglas 20 und dem Aussenglas 10 verklebt ist, wird die PVB-Folie 30 und somit auch die an ihr klebenden Gläser 10, 20 oder Glasfragmente dem unteren Fensterrand 54 entlang am Fensterrahmen 56, 57 festgehalten, und zwar auch dann noch, wenn das Verbundsicherheitsglas zerborsten und entlang der Sollbruchlinie 40 nicht mehr mit dem Fensterrahmen 56, 57 verbunden ist.

Das in den Figuren dargestellte Fenster umfasst somit in intaktem, nicht geborstenen Zustand ein Verbundsicherheitsglas, das auf bekannte Art dem Aussenrand entlang in einen Fensterrahmen geklebt ist. In geborstenem Zustand (d.h. nach einem beabsichtigten oder unbeabsichtigten Bersten des Verbundsicherheitsglases) ist durch das Brechen der Sollbruchlinie 40 die Verbindung zwischen dem Glas und dem Fensterrahmen entlang des oberen 51 und der beiden seitlichen Fensterrändern 52, 53 aufgehoben. Entlang des unteren Fensterrandes 54 bleibt die Verbindung jedoch bestehen. Aufgrund der Flexibilität der PVB-Folie 30 und der kleinsplittrigen Fragmentierung der beiden Einscheibensicherheitsgläser 10, 20 ergibt sich entlang des unteren Fensterrandes 54 eine nach Art eines Scharniergelenks bewegliche Verbindung zwischen dem Fensterrahmen und der mittels der PVB-Folie 30 zusammengehaltenen Fensterfläche. Diese Fensterfläche stellt somit einen Notausstiegsfensterflügel dar, welcher entlang des oberen 51 und der beiden seitlichen Fensterrändern 52, 53 einen freien Rand (d.h. einen bezüglich des Fensterrahmens frei beweglichen Rand) aufweist und welcher entlang des unteren Fensterrandes 54 nach Art eines Scharniergelenks schwenkbar mit dem Fensterrahmen verbunden ist. Bei dem in den Figuren dargestellten Ausführungsbeispiel der Erfindung wird der Notausstiegsfensterflügel im wesentlichen durch die gesamte innerhalb der Fensteröffnung liegende Fensterfläche gebildet.

Im Bedarfsfall wird das Verbundsicherheitsglas mit einem geeigneten Werkzeug zertrümmert. Zu diesem Zweck ist im Wageninnern in der Nähe des Fensters ein Spitzhammer angeordnet. Indem mit dem Spitzhammer auf Fensterfläche über dem randseitigen Hohlraum 40 geschlagen wird, wird zunächst die eine und danach die andere Einscheibensicherheitsglasscheibe 10, 20 zertrümmert, bis der Rand des Notausstiegsfensterflügels entlang des oberen 51 und der beiden seitlichen Fensterrändern 52, 53 freigelegt ist. Anschliessend wird der Notausstiegsfensterflügel um ein durch die flexible PVB-Folie 30 entlang des unteren Fensterrandes 54 gebildetes Scharniergelenk nach aussen oder nach innen geschwenkt, um den Notausstieg zu öffnen.

Wenn das Aussenglas 10 oder das Innenglas 20 unbeabsichtigterweise bricht (z.B. durch einen Steinschlag oder durch eine andere mechanische Fremdeinwirkung), so ist zunächst, wie bei Verbundsicherheitsgläsern üblich, eine sekundäre Sicherheit durch das zweite Glas vorhanden. Bei einem Bersten des ganzen Verbundsicherheitsglases (d.h. bei einem Bersten sowohl des Innen- als auch des Aussenglases 10, 20) wird das Verbundsicherheitsglas über die PVB-Folie 30 dem unteren Fensterrand 54 entlang immer noch reissfest am Fensterrahmen festgehalten, so dass selbst bei hohen Geschwindigkeiten ein Herausfallen des grössten Teils des Glases und eine entsprechende Gefährdung von Personen innerhalb oder ausserhalb des Fahrzeuges verhindert wird.

Zusammenfassend ist festzustellen, dass durch die Erfindung ein Fahrzeugfenster bereit gestellt wird, das im Falle eines Unfalls oder eines Brandes eine einfache Notausstiegsmöglichkeit bietet und im Falle eines unbeabsichtigten Berstens des Fensters die Gefahren für Personen innerhalb und ausserhalb des Fahrzeuges vermindert.

## Patentansprüche

1. Fahrzeugfenster mit einem Verbundsicherheitsglas aus zwei durch eine Zwischenschicht (30) verbundenen Einscheibensicherheitsgläsern (10, 20), wobei durch Diskontinuitäten (40) in der Zwischenschicht (30) Sollbruchlinien zur Schaffung eines Notausstiegs vorhanden sind, dadurch gekennzeichnet, dass die Zwischenschicht (30) in einem mit dem Fahrzeug verbundenen Randbereich des Verbundsicherheitsglases derart undurchtrennbar und flexibel ausgebildet ist, dass beim Durchtrennen der Sollbruchlinien ein reissfest und nach Art eines Scharniergelenks schwenkbar mit dem Fahrzeug verbundener Notausstiegsflügel gebildet wird.

2. Fahrzeugfenster nach Anspruch 1, dadurch gekennzeichnet, dass die Zwischenschicht (30) ein reissfestes, zusammenhängendes Schichtmaterial (30) umfasst, das entlang eines ersten Randabschnittes des Verbundsicherheitsglases mit einem Einstand (E1, E2, E3) bezüglich des Randes derart angeordnet ist, dass durch den Einstand (E1, E2, E3) entlang des ersten Randabschnittes eine Diskontinuität in der Zwischenschicht in Form eines Hohlraumes (40) zwischen den beiden Einscheibensicherheitsgläsern (10, 20) gebildet wird, wobei das Schichtmaterial (30) entlang eines zweiten, den mit dem Fahrzeug verbundenen Randbereich umfassenden Randabschnittes ohne Einstand bezüglich des Randes angeordnet ist.

3. Fahrzeugfenster nach Anspruch 2, dadurch gekennzeichnet, dass entlang des ersten Randabschnittes die Fensterfläche mindestens eines der beiden Einscheibensicherheitsgläser (10, 20) vom Rand bis über den Einstand (E1, E2, E3) des Schichtmaterials (30) hinaus mit einer Sichtabdeckung überdeckt ist.

4. Fahrzeugfenster nach Anspruch 2 oder 3, dadurch gekennzeichnet, dass es eine im wesentlichen rechteckige Form mit einem oberen Fensterrand (51), zwei seitlichen Fensterrändern (52, 53) und einem unteren Fensterrand (54) aufweist, wobei der erste Randabschnitt des Verbundsicherheitsglases im wesentlichen entlang des oberen (51) sowie der beiden seitlichen Fensterränder (52, 53) und der zweite Randabschnitt entlang des unteren Fensterrandes (54) ausgebildet sind.

5. Fahrzeugfenster nach einem der Ansprüche 1 bis 4, dadurch gekennzeichnet, dass die Zwischenschicht (30) eine Kunststofffolie (30) umfasst.

6. Fahrzeugfenster nach Anspruch 5, dadurch gekennzeichnet, dass die Zwischenschicht (30) eine Folie (30) aus PVB (Polyvinylbutyral) umfasst.

7. Fahrzeugfenster nach Anspruch 5, dadurch gekennzeichnet, dass die Zwischenschicht (30) eine Folie aus EVA (Ethylen-Vinylacetat-Copolymer) umfasst.

8. Fahrzeugfenster nach einem der Ansprüche 1 bis 7, dadurch gekennzeichnet, dass das Verbundsicherheitsglas mittels eines randseitigen Dichtungsrahmens (60) hermetisch versiegelt ist.

9. Fahrzeugfenster nach Anspruch 8, dadurch gekennzeichnet, dass der randseitige Dichtungsrahmen (60) des Verbundsicherheitsglases im wesentlichen aus Polyurethan gefertigt ist.

10. Fahrzeugfenster nach einem der Ansprüche 1 bis 9, dadurch gekennzeichnet, dass es ein weiteres, zum ersten ähnliches Verbundsicherheitsglas umfasst, wobei die beiden Verbundsicherheitsgläser im wesentlichen parallel zueinander in einer Fensteröffnung angeordnet sind, um eine Isolierverglasung zu bilden.
